Europäisches Patentamt

European Patent Office

Office européen des brevets

(19)

(11) Numéro de publication: **0 051 551**

**A1**

(12)

# DEMANDE DE BREVET EUROPEEN

(21) Numéro de dépôt: **81440026.3**

(22) Date de dépôt: **20.10.81**

(51) Int. Cl.³: **B 01 D 9/02**

(30) Priorité: **04.11.80 FR 8023769**
**27.04.81 FR 8108509**

(43) Date de publication de la demande:
**12.05.82 Bulletin 82/19**

(84) Etats contractants désignés:
**DE GB NL**

(71) Demandeur: **B.E.F.S. ENGINEERING S.A. Société Anonyme dite**
**74, Avenue Paul Doumer**
**F-75016 Paris(FR)**

(72) Inventeur: **Schwartz, Gilbert**
**20, Impasse Montreville**
**F-54000 Nancy (Meurthe & Moselle)(FR)**

(74) Mandataire: **Aubertin, François**
**Cabinet BUGNION PROPRIETE INDUSTRIELLE 4, rue de Haguenau**
**F-67000 Strasbourg(FR)**

(54) Procédé et appareil pour la purification de tout produit cristallisable, notamment de solutions à faible concentration.

(57) On opère à la cristallisation, la séparation liquide-solide et la purification de tout produit cristallisable dans la zone de − 70° à + 250° Celsius par actions discontinues s'enchaînant les unes après les autres réalisées dans un même appareil, produit localisé à l'extérieur des tubes dans lesquels le transfert de chaleur est obtenu par circulation ou évaporation ou condensation successives du fluide de transfert circulant à l'intérieur des tubes.

L'appareil comporte plusieurs étages de traitement superposés (2,3,4), fonctionnant en parallèle et de manière identique, ces étages ayant une section cylindrique.

EP 0 051 551 A1

Croydon Printing Company Ltd.

Fig 4

Procédé et appareil pour la purification de tout produit cristallisable, notamment de solutions à faible concentration.

L'invention concerne, d'une part, un procédé et, d'autre part, un appareil pour la purification de tout produit cristallisable, qu'il soit organique, minéral, aqueux ou autres.

On connaît déjà, par le brevet français n° 1.203.862, un procédé et un appareil pour le raffinage de la naphtaline brute.

Selon ce brevet, le procédé pour le raffinage de la naphtaline brute consiste à refroidir lentement la substance liquide à purifier pour cristalliser l'ensemble de celle-ci, à réchauffer lentement la masse cristallisée et à aliminer la fraction liquide riche en impuretés qui s'écoule d'abord, puis à faire fondre les cristaux résiduaires pour recueillir à l'état liquide les substances purifiées. La fraction liquide riche en impuretés peut, à son tour, être refroidie et cristallisée de la même façon puis réchauffée pour séparer à nouveau une fraction plus concentrée en impuretés et la substance résiduaire récupérée est recyclée pour le traitement de la substance brute à purifier.

Ce brevet concerne également un appareil comprenant une cuve séparée en deux parties superposées par un dispositif filtrant placé au voisinage de son fond, la partie supérieure de la cuve contenant des éléments tubulaires pour la circulation d'un fluide d'échange thermique laissant entre eux des espaces libres pour le parcours de la naphtaline brute, la partie supérieure de la cuve étant pourvue d'un orifice d'introduction de celle-ci, cependant qu'un orifice d'évacuation de ses divers constituants est prévu à la base de la partie inférieure.

Toutefois, ce procédé et l'appareil pour sa mise en oeuvre présentent un certain nombre d'inconvénients. Ainsi, pour purifier la substance cristallisable et pour concentrer toutes les impuretés dans un petit volume, on est obligé de procéder à plusieurs opérations en cascade. Par ailleurs, le refroidissement et le réchauffement de la substance à purifier sont influencés par les conditions de température extérieure. Finalement, le débit de fluide d'échange thermique est important.

On connaît également, par le brevet français n° 1.555.614, un procédé et un appareil pour la purification des composés organiques cristallisables. Ce procédé est un procédé de purification d'un composé organique cristallisé introduit à l'état liquide dans un récipient et consistant à solidifier ce composé par refroidissement puis à le réchauffer lentement pour provoquer la fusion des impuretés qui sont égouttées du produit restant, ce dernier étant progressivement purifié et recueilli lorsqu'il a atteint la pureté désirée. Le refroidissement et le réchauffement du composé à purifier sont effectués en faisant s'écouler un fluide liquide ou gazeux d'échange thermique sur les parois externes du récipient qui le contient, ledit récipient présentant à cet effet une grande surface de transfert.

Ce brevet concerne également un appareil comportant un récipient de traitement pour le produit à purifier et des moyens pour admettre le produit dans ledit récipient, un dispositif pour l'évacuation de celui-ci et un dispositif pour projeter un fluide d'échange thermique sur la paroi externe du récipient. Ce dernier est constitué par au moins un élément de transfert comportant un faisceau de tubes montés dans un tube de plus grand diamètre au moyen d'ailettes longitudinales intérieures, ledit élément de transfert étant monté dans le circuit de circulation du produit à purifier.

Toutefois, ce procédé et cet appareil présentent plusieurs inconvénients. En effet, le produit à purifier passe par différentes opérations tels que remplissage du récipient de traitement, cristallisation, réchauffement lent et évacuation des impuretés, fusion du produit purifié et vidange. Du fait que chaque appareil est inutilisable pour une autre opération presqu'à la fin du cycle, le traitement en discontinu de quantités importantes de produit nécessite donc des installations encombrantes.

Pour pallier à ces inconvénients, on a apporté des perfectionnements indiqués dans un certificat d'addition n° 94.215 rattaché au brevet cité ci-dessus. Ainsi, au lieu de soumettre en une seule fois une grande quantité de produit aux opérations successives énumérées ci-dessus, on divise cette quantité en parties égales que l'on soumet successivement aux dites opérations en tenant compte du temps nécessaire pour chacune de celles-ci. On introduit successivement des portions de produit à purifier dans plusieurs récipients à des intervalles de temps réguliers et on soumet le produit contenu dans chaque récipient à un cycle complet de purification, décalé dans le temps par rapport au cycle du récipient rempli immédiatement avant lui de la durée d'un desdits intervalles, en maintenant, au moyen du fluide d'échange thermique, la température du produit dans chaque récipient à la valeur appropriée à la partie du cycle où se trouve ledit produit.

Pour la réalisation de ce procédé, on a conçu un appareil comportant au moins quatre récipients de traitement pour le produit à purifier disposés en parallèle et reliés respectivement à une source de produit brut à purifier et à des collecteurs d'impuretés et de produit purifié par l'intermédiaire de dispositifs pour admettre successivement les impuretés et le produit purifié, et des dispositifs pour projeter successivement des fluides d'échange thermique sur les parois externes de chaque récipient.

Toutefois, les appareils connus ne permettent qu'un seul mode d'utilisation et, parfois, il serait souhaitable que ce même appareil puisse permettre un certain nombre d'exploitations. De plus, les appareils connus comportent une hauteur limitée en raison de l'écoulement du liquide tout en agissant sur le temps et le débit du liquide. Du fait que l'appareil est un parallélépipède rempli de tubes à ailettes dans lesquels on introduit les produits à traiter, ces appareils sont peu résistants à la pression et/ou vides. Leur emprise au sol est très grande et ils comportent un grand nombre de soudures internes, ce qui est une source d'inquiétude en cas de fuite ou de défaut de soudure. Par ailleurs, les appareils connus, en raison de la combinaison de tubes et enveloppes, sont soumis à des contraintes cycliques dues aux dilatations. Finalement, ces appareils ne peuvent fonctionner que par la circulation du fluide de transfert.

On connaît également, par les brevets américains n° 3.305.320, n° 3.392.539 et n° 2.874.199, des procédés et appareils pour la cristallisation. Toutefois, il s'agit de cristallisations continues, Ainsi, on alimente l'appareil pendant que l'on cristallise. Les cristaux et le liquide de lavage sont en mouvement et en contre-courant, c'est-à-dire que les cristaux sont soumis à un mouvement descendant alors que le liquide présente un mouvement ascendant.

L'appareil de cristallisation, selon le brevet américain n° 2.874.199, comporte des tôles plongeant dans un liquide situé en bas de l'appareils et la chaleur remonte le long de ces tôles. De ce fait, on obtient un gradient thermique dont la température est croissante dans le sens d'avancement des cristaux. De plus, ces appareils présentent l'inconvénient d'être constitués de nombreux éléments utilisés en parallèle dans lesquels les phénomènes de surfusion sont difficilement maîtrisables, et l'équilibre thermique reste hasardeux, particulièrement pour les produits très concentrés.

Pour la même raison, les nettoyages éventuellement nécessaires lors du traitement de produits souillés sont difficilement contrôlables.

La présente invention a pour but de remédier à ces inconvénients. L'invention, telle qu'elle est caractérisée dans les revendications, résout le problème consistant à créer un appareil utilisant un nouveau procédé selon lequel les cristaux sont statiques et l'ensemble, pendant la cristallisation, est en phase statique, seul le fluide de transfert étant mobile. Selon l'invention, on alimente l'appareil, on cristallise et quand tout le produit est cristallisé, on procède à la séparation, les différentes opérations s'enchaînant les unes derrière les autres. La chaleur, en provenance des tubes, se diffuse horizontalement permettant de réduire au maximum le gradient thermique.

Les avantages obtenus grâce à cette invention consistent essentiellement en une augmentation de la nature des produits à purifier et un élargissement dans les domaines moins contrôlés.

L'invention est exposée ci-après plus en détail à l'aide de dessins représentant seulement un mode d'exécution.

La figure 1 représente par un schéma de base une fusion fractionnée à un étage.

La figure 2 représente par un schéma de base une fusion fractionnée à deux étages.

La figure 3 représente par un schéma de base une cristallisation fractionnée à quatre étages.

La figure 4 représente en vue en élévation l'appareil conforme à l'invention.

La figure 5 représente en vue en élévation le corps d'échange.

La figure 6 représente en vue en plan le corps d'échange.

La figure 7 représente en vue en perspective le corps d'échange.

La figure 8 représente en vue agrandie en élévation les chicanes intermédiaires.

La figure 9 représente en vue latérale ces chicanes.

La figure 10 représente en vue en plan ces chicanes.

La figure 11 représente en vue en élévation des tôles-diffuseurs.

La figure 12 représente en vue en plan ces tôles-diffuseurs.

La figure 13 représente en vue en élévation les boîtes supérieure et inférieure de l'appareil.

Les éléments essentiels d'une unité de purification de produit cristallisable sont un raffineur proprement dit, réalisé par un ou plusieurs étages utilisés en série ou en parallèle, chaque module étant constitué par une capacité dotée d'un équipement interne de transfert et de diffusion de chaleur de haute efficacité, traversé par le fluide de transfert. Ce raffineur est relié par une conduite d'amenée et une conduite de refoulement à une station thermique regroupant tous les moyens nécessaires pour assurer le refroidissement et le réchauffage du raffineur, selon un programme de température et/ou de transfert préréglés. Par ailleurs, ce raffineur est relié à une station de chargement comprenant des bacs et des pompes destinés aux différentes opérations de remplissage et de vidange fractionnées du raffineur. Tant le raffineur que la station de chargement sont reliés à une conduite véhiculant soit le liquide séparé constituant le rejet, soit la production.

Les produits traités sont essentiellement : Naphtaline, anthracène, paradichlorobenzène, paranitrochlorobenzène, dichloronitrobenzène, acide monochloroacétique, alphaméthylstyrène, benzène, chlorobenzène, nitrochlorobenzène, nitrochlorotoluène, chloroacétophénone, caprolactam, diphényl, nitronaphtalène, alfanaphtol, phénol, paracrésol, paraxylène, phénantrène, acide 11 bromo, acide heptanoïque, rosine acide (colophane), eaux résiduaires, eaux ammoniacales, eaux phénolées, eau de mer, lactosérum, etc....

Le fonctionnement de l'installation est cyclique et chaque cycle peut comprendre une ou plusieurs phases en fonction du nombre d'étages nécessaires à la purification. Le déroulement d'un cycle normal est le suivant :

- après le remplissage, effectué par l'intermédiaire de la station de chargement, le raffineur est refroidi par la station thermique selon un programme optimisé de façon à favoriser le grossissement des cristaux. En fin de cristallisation, le liquide est séparé simplement par gravité et constitue le rejet. La masse cristalline restante, constituée par les cristaux formés mouillés par un film de liquide de même composition que le rejet, est ensuite réchauffée lentement. Au cours du réchauffage, un nouveau film liquide, issu du cristal, se forme et remplace le film précédent. Le liquide, ainsi libéré, s'écoule en gravité vers le fond du raffineur d'où il est retourné vers la station de chargement et, notamment vers le réservoir d'alimentation. Ce liquide constitue le reflux. En fin d'épuration, c'est-à-dire après avoir refondu 20 à 40 % des cristaux formés, le liquide retenu par les cristaux restants, a une composition voisine de celle du cristal. Le mélange est enfin réchauffé rapidement par la station thermique et constitue, après fusion totale, la production.

Selon un autre mode de réalisation surtout utilisé pour une faible concentration de l'ordre de 5 à 40 %, le déroulement d'un cycle normal est le suivant :

- le raffineur est alimenté en continu à un débit connu de produits à cristalliser, l'excédent, c'est-à-dire la fraction à rejeter étant évacuée par trop plein. Pendant ce temps, le raffineur est refroidi par la station thermique avec un débit de fluide réfrigérant tel que le gradient vertical correspond au gradient de concentration désirée sur le produit à cristalliser. Donc, progressivement, l'appareil se garnit de cristaux et quand l'appareil est suffisamment rempli, le liquide en excès est séparé simplement par gravité. La masse cristalline restante, constituée par les cristaux formés mouillés par un film de liquide d'une composition moyenne entre le rejet et l'alimentation est ensuite réchauffée lentement.

Ce mode de réalisation permet une amélioration de la productivité par un gain de temps, une économie d'énergie ainsi qu'une réduction des frais d'investissement par suite de la réduction du matériel annexe.

Ce cycle est un cycle de "fusion fractionnée".

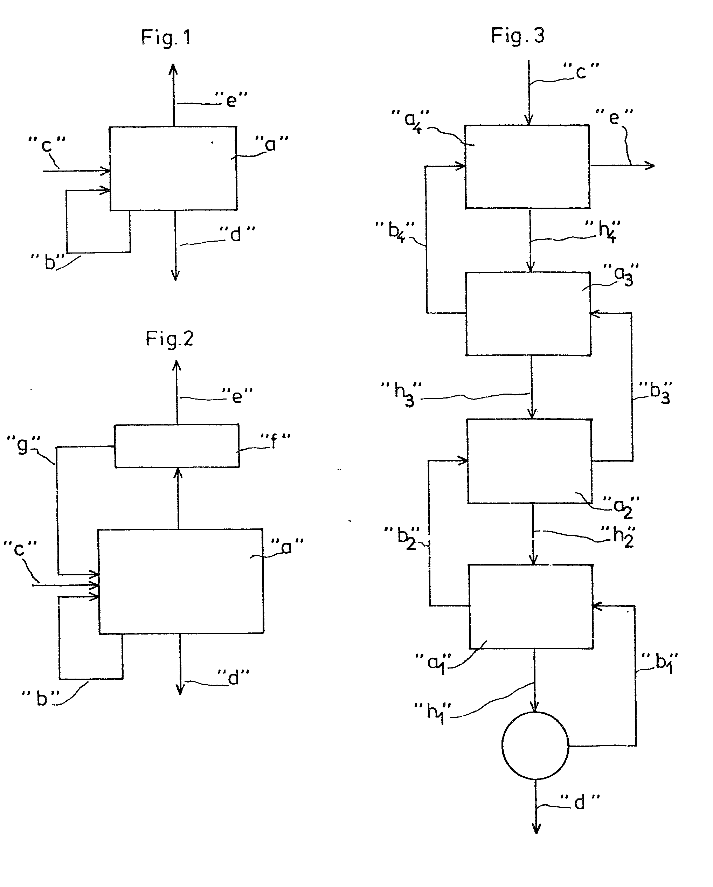

On se réfère aux figures 1 et 2.

La figure 1 est un schéma de base d'une fusion fractionnée à un étage dans laquelle "a" est l'étage du raffineur, "b" le circuit de reflux, "c" l'alimentation, "d" la production et "e" le rejet.

La figure 2 est un schéma de base d'une fusion fractionnée à deux étages dans laquelle "f" est l'étage de récupération et "g" le circuit de recyclage reliant l'étage du raffineur "a" à l'étage de récupération "f".

Dans certains cas, et particulièrement en présence de solutions solides, on opère en "cristallisation fractionnée", le déroulement est analogue mais l'épuration est limitée à la refusion de 5 à 10 % de cristaux, le reste est refondu puis complété par une fraction de même nature avant d'être recristallisé et à nouveau séparé du liquide.

On se réfère à la figure 3.

Cette figure est un schéma de base d'une cristallisation fractionnée à quatre étages "$a_1$, $a_2$, $a_3$, $a_4$" symbolisant l'enchaînement des quatre phases d'un cycle à quatre étages réalisé dans un seul et même appareil. Les cristaux formés épurés et refondus demeurent dans l'appareil jusqu'à la fin du cycle (vecteurs $h_1$, $h_2$, $h_3$, $h_4$). Le complément de charge est assuré par le reflux provenant du cycle précédent (vecteurs $b_1$, $b_2$, $b_3$, $b_4$). Le produit à purifier est alimenté en "C", le rejet est extrait en "e" et le produit purifié en "d".

Si le produit à purifier est faiblement concentré (10 à 20 %), on procède à un enrichissement en cristaux par plusieurs charges successives du raffineur avant de réaliser l'épuration finale.

Pour terminer l'épuration finale, il est parfois intéressant d'effectuer un lavage des cristaux en utilisant une faible quantité de produit purifié.

Sous réserve que la station de chargement soit dotée de deux bacs intermédiaires, il est possible, en combinant les phases de cristallisation fractionnée simple, de cristallisation enrichie suivie de lavage aux phases de fusion fractionnée simple, de fusion enrichie suivie de lavage, d'opérer, avec la même unité, sans modification autre que celle du programme, de six manières différentes appliquées sur un, deux ou trois étages, soit dix-huit possibilités d'exploitation.

Pour augmenter le nombre de possibilités à vingt quatre, on prévoit un quatrième paramètre. Pour accélérer l'écoulement du liquide dans certains cas difficiles, on provoque un vide modulé qui entraîne un rapprochement des différents cristaux. Ce rapprochement provoque un effet mécanique au niveau de chaque cristal, ce qui entraîne une évacuation accélérée du liquide. L'intérêt de cette possibilité sous vide consiste également à l'élimination finale d'un solvant qui aurait pu être utilisé pour un lavage final éventuel. Le point d'ébullition du solvant étant différent de celui des cristaux, il y a évaporation préliminaire du solvant sous vide.

Ces nombreuses possibilités permettent à l'usager d'optimiser et de rationaliser les opérations en fonction des impératifs de qualité et de rendement, notamment, en utilisant deux appareils, il est possible de faire, soit une alimentation en continu périodique, soit en continu intégral. Dans ce cas, l'un des appareils est en phase d'enrichissement et l'autre est en phase d'épuration ou inversement.

La station thermique peut être intégrée au raffineur, ou indépendante dans le cas de plusieurs modules utilisés en parallèle et déphasés. Selon la zone de température, où l'on opère, le refroidissement peut être assuré par l'air ambiant, l'eau de circulation ou par un groupe frigorifique et le réchauffage à l'huile thermique, la vapeur ou toute autre source de chaleur à bas potentiel.

L'utilisation éventuelle d'une pompe à chaleur apporte des économies d'énergie appréciables. L'efficacité est considérable grâce à l'utilisation d'un équipement interne de diffusion de chaleur permettant d'obtenir un $\Delta t$ très faible.

De conception, les étages de raffineur peuvent fonctionner côté fluide de transfert en évaporateur ou en condenseur ; le faible $\Delta t$ né- cessaire permet alors d'assurer la fusion d'un des étages en utilisant la chaleur de cristallisation de celui qui est en refroidissement, la consommation d'électricité s'établit alors en moyenne à 1 KWh pour six thermies transférées de l'un vers l'autre. Les besoins du refroidissement sont également supprimés. Ainsi, il est possible de prévoir selon le nombre d'étages un appareil, soit sans récupération de chaleur, soit avec une ou plusieurs pompes à chaleur.

La combinaison de ces options, conjointement aux différents programmes de cristallisation, donne un choix très vaste de possibilités permettant de répondre au mieux à tous les cas de figure que l'on peut rencontrer dans l'industrie dans la zone de température de -70° à +250° Celsius.

La conception modulaire et polyvalente des raffineurs autorise une réalisation en plusieurs étapes avec possibilités d'extension ultérieure sans modification des parties fixes montées à l'origine, ces parties fixes étant la station thermique et la station de chargement.

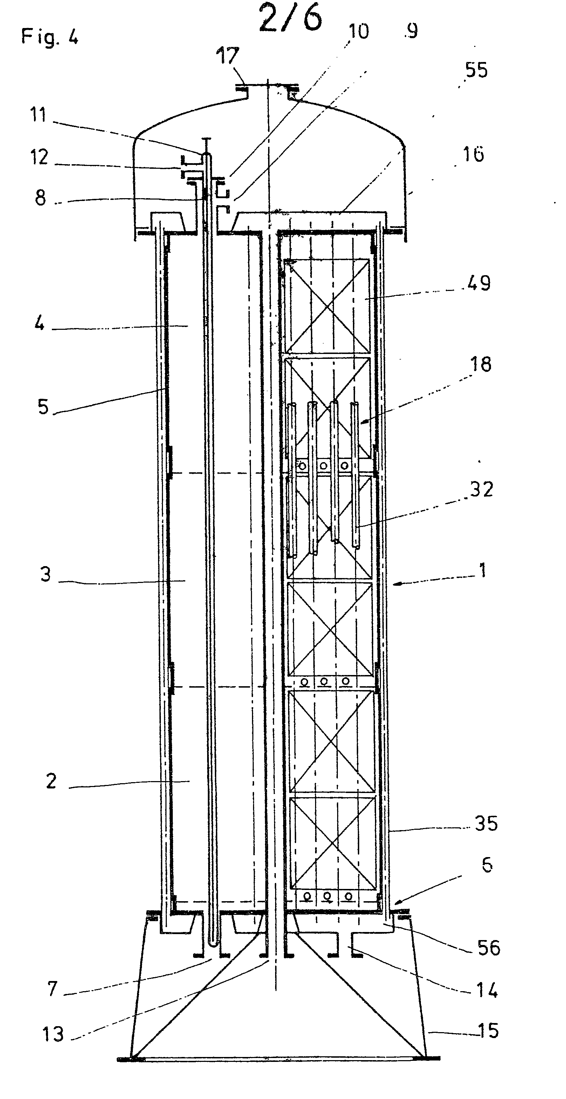

A cet effet, on a conçu un appareil décrit ci-dessous et représenté par les figures 4 à 13. La particularité de cet appareil réside dans le fait qu'il est cylindrique et qu'il est composé d'un certain nombre d'étages superposés. Le produit à purifier se trouve à l'extérieur d'un réseau de tubes et il est traité par évaporation et condensation successives d'un fluide de transfert circulant à l'intérieur des tubes.

On se réfère à la figure 4.

L'appareil 1 comporte un certain nombre d'étages de traitement superposés 2, 3, 4... de section cylindrique. Le nombre des étages n'est pas limitatif. L'appareil 1 comprend une enceinte 5 présentant, à sa partie inférieure 6 une entrée de produit 7 et un doigt de gant pour la vapeur saturée 8. A sa partie supérieure, l'appareil 1 est pourvu d'un évent 9 et fermé par un couvercle 10. Ce couvercle 10 est traversé par une conduite 11 servant de sortie des condensats de vapeur d'eau. Sur cette conduite 11 est branchée une entrée de vapeur d'eau 12. Le centre de l'appareil 1 est pourvu d'une conduite centrale 13 servant d'entrée du fluide de transfert. Par ailleurs, on prévoit à la partie inférieure 6 une sortie du fluide condensé 14. L'appareil 1 repose sur un support 15 et il est fermé par un couvercle de protection 16 pourvu d'un trou d'homme 17. L'appareil 1 comporte un ensemble de corps d'échange 18.

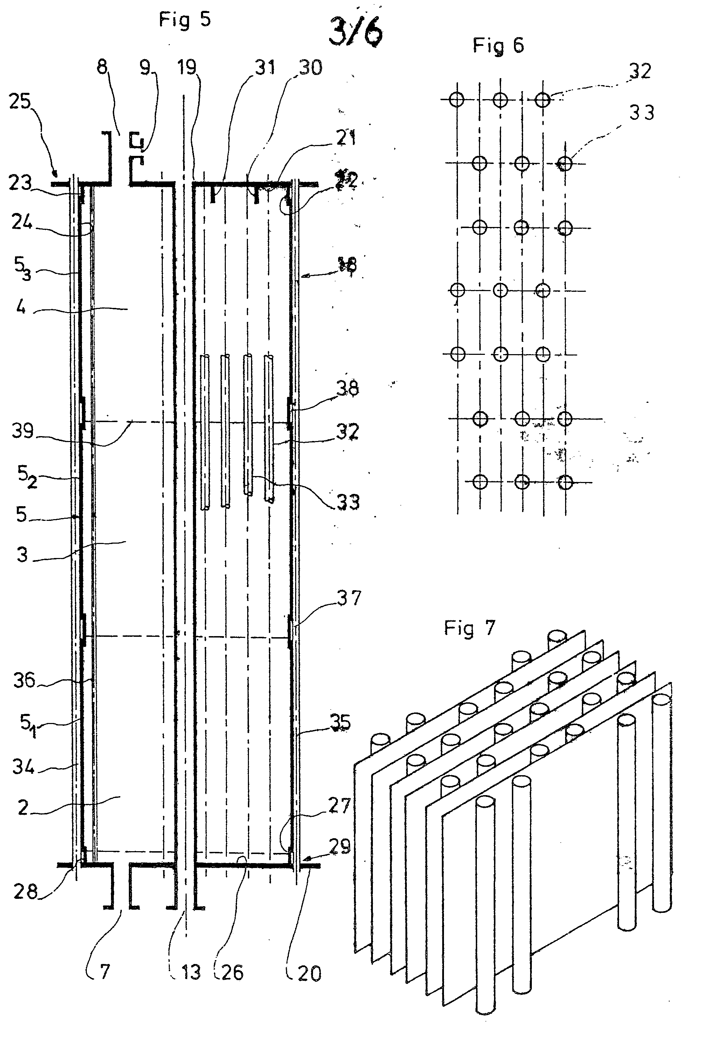

On se réfère aux figures 5 à 7.

Le corps d'échange 18 comporte une plaque tubulaire supérieure 19 et une plaque tubulaire inférieure 20. La face inférieure 21 de la plaque tubulaire supérieure 19 est pourvue d'une virole 22. La face extérieure 23 de cette virole 22 est solidaire de la face intérieure 24 de l'extrémité supérieure 25 de l'enceinte 5. De même, la face supérieure 26 de la plaque tubulaire inférieure 20 présente une virole 27 dont la face extérieure 28 est également solidaire de la face intérieure 23 de l'extrémité inférieure 29 de l'enceinte 5. Selon le nombre d'étages choisis, cette enceinte 5 est divisée en plusieurs viroles $5_1$, $5_2$, $5_3$, le nombre de ces viroles $5_1$, $5_2$, $5_3$ étant fonction du nombre des étages 2, 3, 4 .... Par ailleurs, la face inférieure 21 de la plaque tubulaire supérieure 19 comporte des raidisseurs 30, 31.

Les deux plaques tubulaires 19 et 20 sont traversées par un faisceau de tubes internes 32, 33... et par un faisceau de tubes externes 34, 35 enrobant par intermittence les viroles $5_1$, $5_2$, $5_3$, ces tubes externes 34, 35 permettant de rendre l'appareil 1 isotherme. L'ensemble de cet appareil 1 est strictement à la même température, ce qui permet d'obtenir une uniformisation de la cristallisation. Les contraintes verticales dues à la dilatation entre l'enceinte 5 et les tubes 32 à 35 sont annulées par les tubes externes 34, 35 travaillant comme les tubes internes 32, 33. Pour maintenir assemblé l'appareil 1, on prévoit des tirants 36. Le positionnement des tubes internes 32, 33 est visible dans la figure 6. Les différentes viroles $5_1$, $5_2$, $5_3$ sont maintenues ensemble par des viroles d'assemblage 37, 38.

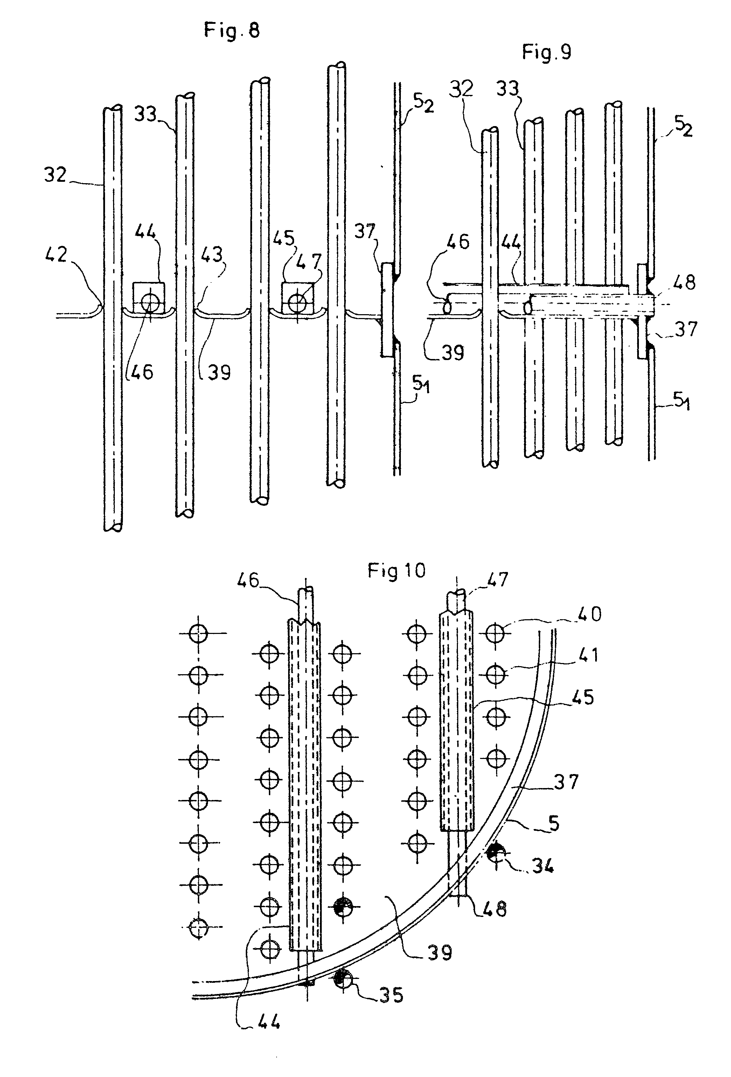

On se réfère aux figures 8 à 10 montrant essentiellement les moyens de drainage. Ces moyens sont constitués par un plateau 39 comportant des trous emboutis 40, 41 pour le passage des tubes 32, 33. Les trous emboutis 40,41 sont réalisés de telle manière que leurs bords 42, 43 sont relevés. De ce fait, on obtient une sorte de cuvettes dans lesquelles peut circuler le liquide à drainer. Toutes les deux rangées de tubes 32, 33 sont disposées sur le plateau 39 des profilés perforés 44, 45 ayant la section d'un U renversé coiffant des tubes transversaux 46, 47 ouverts à leur extrémité 48 et faisant saillie extérieurement par rapport à la virole d'assemblage 37. Dans ces tubes transversaux 46, 47 sont placés des pilotes de réchauffage (non représentés). Les diffuseurs dont la description suit s'arrêtent au-dessus des profilés perforés 44, 45 pour constituer une zone horizontale de grande perméabilité.

Le liquide drainé horizontalement est dirigé vers un drainage vertical constitué par le tube coaxial 13 (voir figure 4) réchauffé à la vapeur et aboutissant jusqu'à la tubulure d'extraction.

Le liquide d'échange circulant dans les tubes 32 à 36 est un liquide quelconque tel que l'eau additionnée de glycol ou un fluide caloporteur ou un fréon adapté aux zones de température du produit à cristalliser.

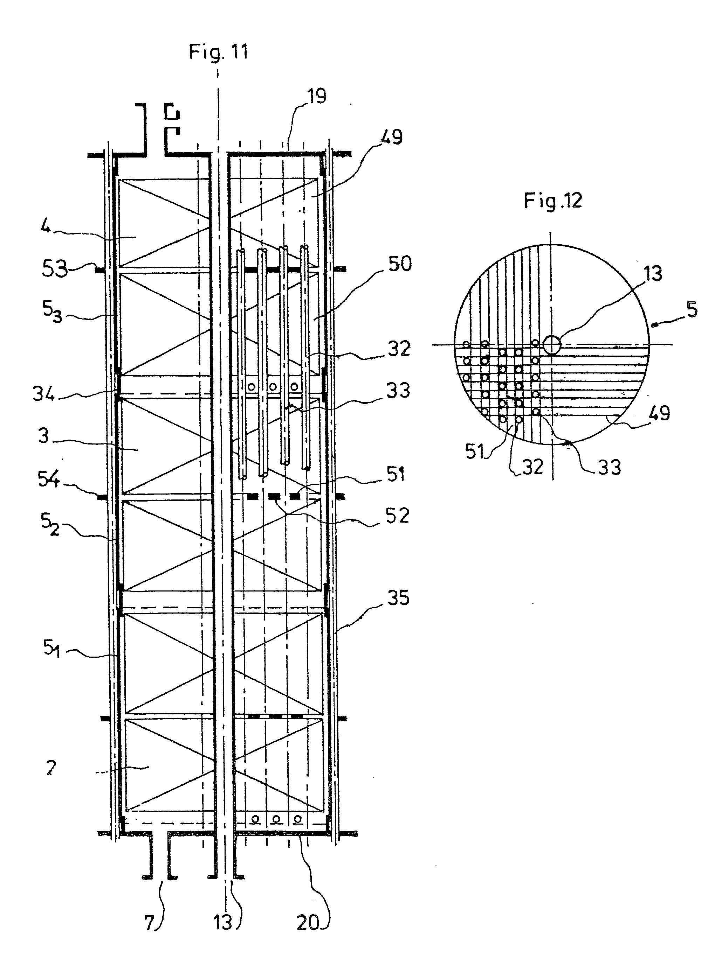

On se réfère aux figures 11, 12.

On intercale entre les tubes internes 32, 33 dans lesquels circule le fluide caloporteur des diffuseurs 49, 50 constitués par des tôles et formant des ailettes d'échangeur. Toutefois, la quantité de liquide retenue par ces tôles 49, 50 est considérablement diminuée en raison de la solution de la continuité de ces tôles 49, 50. Ces tôles 49, 50, en raison de leur grande surface, facilitent l'écoulement du liquide par effet de paroi. Ces tôles présentent plusieurs avantages importants. En effet, elles ont un rôle thermique favorisant le transfert de la chaleur. Le réseau des tôles étant plus chaud et plus perméable, elles favorisent l'écoulement du liquide en le dirigeant vers le bas. Ainsi, on obtient davantage de drainage individuel pour chaque étage avec un regroupement et évacuation du liquide par le centre.

Les tôles 49, 50 sont mises en place au-fur-et-à-mesure du montage des tubes 32, 33. Entre chaque ensemble de tôles 49, 50 perpendiculairement à celles-ci, et entre chaque rang de tubes 32, 33, on intercale des plats 51, 52. Ces plats 51, 52 limitent la longueur de flambage des tubes 32, 33. Puis, on soude sur les viroles $5_1$, $5_2$, $5_3$ des frettes extérieures 53, 54.

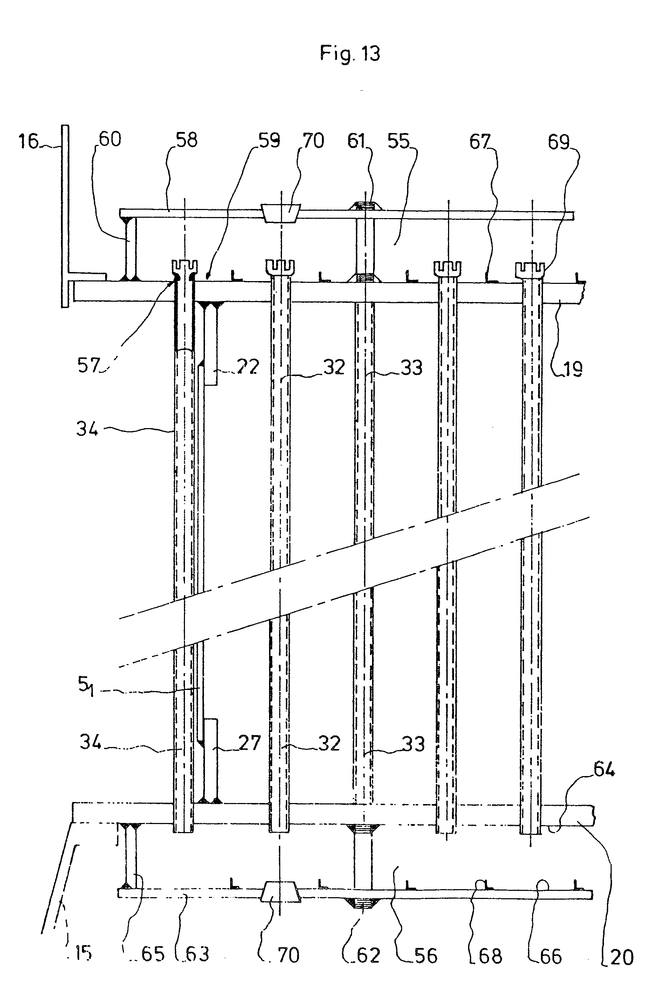

On se réfère à la figure 13 représentant les boîtes supérieure 55 et inférieure 56 dans lesquelles débouchent les extrémités 57 des tubes internes 32, 33 et externes 34, 35. La boîte supérieure 55 est constituée d'un fond 58 rendu solidaire du dessus 59 de la plaque tubulaire supérieure 19 par une virole 60. Pour éviter une déformation de cette boîte supérieure 55, on prévoit des raidisseurs 61. De même, on prévoit des raidisseurs 62 pour la boîte inférieure 56 formée par un fond 63 rendu solidaire de la face inférieure 64 de la plaque tubulaire inférieure 20 par une virole 65. Le dessus 59 de la plaque tubulaire supérieure 19 et le dessus 66 du fond 63 sont pourvus de barrages 67, 68 formés par des profilés en forme d'équerre. L'extrémité supérieure des tubes 32 à 35 comporte un répartiteur 69. Ce dernier est utilisé à chaque fois que le transfert de chaleur s'effectue par film tombant en évaporation ou en condensation et particulièrement dans le cas où on utilise la solution d'enrichissement continu. On dispose également dans les boîtes supérieure 55 et inférieure 56 des bouchons 70.

Ainsi, chaque étage 2, 3, 4... comporte individuellement son ensemble de diffuseurs 49, 50 et ils sont séparés par les moyens de drainage horizontal, à savoir le plateau 39. Par contre, ils sont reliés verticalement par l'ensemble des tubes 32 à 35, des tirants 26, le drainage central vertical, etc....

Revendications

1. Procédé pour la purification de tout produit cristallisable, qu'il soit organique, minéral, aqueux ou autres, caractérisé en ce que l'on opère à la cristallisation, la séparation liquide-solide et la purification de tout produit cristallisable dans la zone de -70° à +250° Celsius par actions discontinues s'enchaînant les unes après les autres réalisées dans un même appareil, produit localisé à l'extérieur des tubes dans lesquels le transfert de chaleur est obtenu par circulation ou évaporation ou condensation successives du fluide de transfert circulant à l'intérieur des tubes.

2. Procédé selon la revendication 1, caractérisé en ce que, après une première cristallisation, la masse cristalline restante, demeurant à la place où elle s'est formée et constituée par les cristaux formés lors de la première cristallisation et mouillés par un film liquide de même composition que le rejet, est ensuite réchauffée lentement à l'emplacement où elle s'est formée après une première cristallisation et séparation du liquide de rejet, le liquide retenu par les cristaux restants en fin de fusion fractionnée présentant une composition voisine de celle du cristal.

3. Procédé selon la revendication 1, caractérisé en ce que l'on opère en cristallisation fractionnée dont l'épuration est limitée à la refusion d'une partie des cristaux, le reste étant refondu puis complété par une fraction de même nature avant une nouvelle cristallisation et une nouvelle séparation liquide-solide, étant entendu que ces opérations sont discontinues et s'enchaînant les unes après les autres.

4. Procédé selon la revendication 1, caractérisé en ce que l'on opère à un enrichissement en cristaux par plusieurs charges successives avant épuration finale, ces épurations étant discontinues et s'enchaînant les unes après les autres.

5. Procédé selon la revendication 1, caractérisé en ce que l'enrichissement en cristaux, avant épuration finale, se fait par une alimentation continue du produit à cristalliser.

6. Procédé selon la revendication 1, caractérisé en ce que l'on opère à un lavage des cristaux par l'apport d'une faible quantité de produit purifié.

7. Procédé selon la revendication 1, caractérisé en ce que l'on opère à la combinaison d'une cristallisation fractionnée simple, d'une cristallisation fractionnée enrichie et d'une cristallisation fractionnée suivie d'un lavage avec une fusion fractionnée simple, une fusion fractionnée enrichie, une fusion fractionnée suivie d'un lavage.

8. Procédé selon les revendications 1 et 7, caractérisé en ce que la combinaison est appliquée à au moins une phase du cycle.

9. Procédé selon la revendication 1, caractérisé en ce que l'on opère dans l'appareil à un vide modulé entraînant un rapprochement des différents cristaux provoquant un effet mécanique au niveau de chaque cristal en vue d'une évacuation accélérée du liquide.

10. Procédé selon la revendication 5, caractérisé en ce que l'alimentation en produit à cristalliser se fait en continu périodique.

11. Procédé selon les revendications 5 et 10, caractérisé en ce que l'alimentation en continu périodique et/ou en continu intégral se fait en utilisant deux appareils, l'un étant en phase d'enrichissement et l'autre en phase d'épuration ou inversement.

12. Procédé selon la revendication 5, caractérisé en ce que le débit du fluide réfrigérant est réduit pour assurer le gradient thermique nécessaire.

13. Appareil pour la réalisation du procédé pour la purification de tout produit cristallisable selon la revendication 1, caractérisé en ce qu'il comporte plusieurs étages de traitement superposés (2, 3, 4), fonctionnant en parallèle et de manière identique, de section cylindrique, entourés d'une enceinte (5) pourvue d'une entrée de produit (7), surmontée d'un doigt de gant pour la vapeur saturée (8) et d'une entrée de vapeur d'eau (12), d'une conduite centrale d'entrée du fluide de transfert (13), d'une sortie du fluide condensé (14) constituant un drainage vertical et d'un ensemble de corps d'échange (18), le tout reposant sur un support (15) et étant fermé par un couvercle d'étanchéité (16).

14. Appareil selon la revendication 13, caractérisé en ce que le corps d'échange (18) comporte une plaque tubulaire supérieure (19) et une plaque tubulaire inférieure (20) reliées, entre elles par une enceinte (5) composée d'au moins une virole et par des tirants (36), ces plaques tubulaires (19,20) étant traversées par un faisceau de tubes internes (32, 33) et enrobées par des tubes externes (34, 35) travaillant comme les tubes internes (32, 33) pour éliminer les contraintes verticales dues à la dilatation.

15. Appareil selon la revendication 13, caractérisé en ce qu'il comporte entre chaque étage (2, 3, 4) des moyens de drainage horizontal composés d'un plateau (39) présentant des trous emboutis à bord relevé (40, 41), des profilés perforés (44, 45) disposés entre les rangées de tubes (32, 33) et des tubes transversaux (46, 47) ouverts vers l'extérieur dirigeant le liquide vers le drainage vertical, le liquide s'écoulant le long de diffuseurs (49, 50).

16. Appareil selon la revendication 13, caractérisé en ce que chaque étage (2, 3, 4) comporte des tôles (49, 50) en contact direct avec chaque rangée de tubes (32, 33) diffusant la chaleur horizontalement, favorisant le drainage du liquide vers le bas et servant de moyens d'accrochage aux cristaux, et des plats (51, 52) perpendiculaires à ces tôles (49, 50) et situés entre chaque rangée de tubes limitant la longueur de flambage de ces derniers.

17. Appareil selon la revendication 13, caractérisé en ce qu'il comporte une boîte supérieure (55) et une boîte inférieure (56) dans lesquelles débouchent les extrémités (57) des tubes (32 à 35), l'extrémité supérieure de ces tubes (32 à 35) étant pourvue d'un répartiteur (69).

1/6

0051551

Fig.1

Fig.2

Fig.3

Fig. 4

2/6

0051551

Fig 5

Fig 6

Fig 7

Fig. 8

Fig. 9

Fig 10

Fig. 11

Fig.12

Fig. 13

Office européen
des brevets

**RAPPORT DE RECHERCHE EUROPEENNE**

Numéro de la demande
EP 81 44 0026

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| Y | <u>US - A - 3 305 320</u> (MARX E. WEECH)<br>* Colonnes 2-4 *<br><br>-- | 1-5,7-10,13 | B 01 D 9/02 |
| Y | <u>US - A - 3 392 539</u> (EARL S. GRIM-METT)<br>* Colonne 1, lignes 60-72; colonnes 2-6 *<br><br>-- | 1-5,7-10,13 | |
| Y | <u>FR - A - 835 621</u> (EVENCE COPPEE)<br>* Pages 2-3 *<br><br>-- | 1,11 | DOMAINES TECHNIQUES RECHERCHES (Int. Cl. ³)<br><br>B 01 D |
| A | <u>FR - A - 1 183 163</u> (E.A. ZDANSKY) | | |
| A | <u>FR - E - 94 215</u> (PROABO S.A.)<br><br>---- | | |

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche<br>La Haye | Date d'achèvement de la recherche<br>16-02-1982 | Examinateur<br>DE PAEPE |
|---|---|---|

OEB Form 1503.1   06.78